# EUROPÄISCHE PATENTSCHRIFT

(11) **EP 3 724 530 B1**
(45) Veröffentlichungstag und Bekanntmachung des Hinweises auf die Patenterteilung: **27.07.2022**
(21) Anmeldenummer: 18779206.4
(22) Anmeldetag: 10.09.2018
(51) Int. Cl.: F16D 25/08

(54) **KUPPLUNGSAKTUATOR ZUM BETÄTIGEN EINER FAHRZEUGKUPPLUNG**
CLUTCH ACTUATOR FOR ACTUATING A VEHICLE CLUTCH
ACTIONNEUR D'EMBRAYAGE SERVANT À ACTIONNER L'EMBRAYAGE D'UN VÉHICULE

(30) Priorität: 13.12.2017 DE 102017011528
(43) Veröffentlichungstag der Anmeldung: 21.10.2020
(73) Patentinhaber: ZF CV Systems Europe BV, 1170 Brussels (BE)
(72) Erfinder: KLÜCK, Frank-Peter, 31832 Springe (DE); PRASAD MISHRA, Sankar, 30559 Hannover (DE); SCHULZ, Tobias, 30982 Pattensen (DE)
(74) Vertreter: Rabe, Dirk-Heinrich
(86) Internationale Anmeldenummer: PCT/EP2018/074243
(87) Internationale Veröffentlichungsnummer: WO 2019/115029

(56) Entgegenhaltungen:
- EP-A1- 1 066 476
- EP-A2- 1 887 242
- WO-A1-2015/126732
- DE-A1-102009 019 999
- DE-A1-102013 219 842

## Beschreibung

Die Erfindung betrifft einen Kupplungsaktuator zum Betätigen einer Fahrzeugkupplung gemäß dem Oberbegriff des Patentanspruchs 1.

Es sind Kupplungsaktuatoren zum Betätigen einer Fahrzeugkupplung bekannt, bei denen ein mit Druckluft beaufschagbarer Ringkolben eines sogenannten Zentralausrückers mit einer Schiebehülse entlang einer Führungshülse axial verschieblich gelagert ist. Bei derartigen Zentralausrückern, welche auch als "concentric pneumatic clutch actuators" im englischen Spachgebiet bekannt sind, ist in der Regel wenigstens ein Gleitring vorgesehen, welcher dazu dient, den Ringkolben entlang der Führungshülse zu verschieben.

Bislang wurde der Gleitring bzw. die Gleitringe jeweils in einer Nut in der radial inneren Mantelfläche gelagert. Diese Nut weist jeweils zwei sich radial erstreckende Nutwände auf, weldche den Gleitring axial begrenzen bzw. ihn an seinen Platz halten. Aufgrund der baulichen Gegebenheiten war es bislang nur möglich, Gleitringe zu verwenden, welche jeweils geschlitzt waren.Eine derartige Anordnung ist insbesondere aus der DE 102 53 021 A1 bekannt. Das Einsetzen von geschlitzten Gleitringen in die zugeordnete Nut bereitet dabei herstellungsbedingt kein Probleme und derartige Anordnungen haben sich bewährt. Ähnliche Anordnungen sind aus der DE 10 2013 219 842 A1, der EP 2 539 597 B1 und der EP 2 539 598 B1 bekannt.

Beim Betrieb derartiger Kupplungsaktuatoren ist die Lageerfassung des Ringkolbens von erheblicher Bedeutung. Es wird dabei mithilfe von außen am Kupplungsaktuator angeordneten Sensorelementen gemessen, an welcher axialen Position in Bezug auf die Führungshülse sich der Ringkolben befindet. Schon allerkleinste Toleranzen bzw. Verkippungen des Ringkolbens können zu Messfehlern führen, so dass der Fachmann schon seit langem bestrebt ist, die Fehlerquellen für Messfehler möglichst vollständig auszuräumen. Es hat sich gezeigt, dass auch die Gleitringe selbst zu den Messfehlern beitragen können, nämlich durch rotatorische Bewegung um die jeweils haltende Nut herum. Ursache für derartig Bewegungen sind die geschlitzt und auf Stoß in die Nut eingelegten Gleitringe. Da ein auf Stoß verlegter, geteilter Gleitring im Bertrieb des Kupplungsaktuators immer zu Bewegungen neigen wird, wäre es theoretisch von Vorteil, wenn ungeteilte Gleitringe eingesetzt werden könnten, so dass jegliche rotatorische oder axiale Bewegung des jeweiligen Gleitrings unmöglich gemacht werden würde. Dem stehen allerdings die bisherigen Konstellationen der Nuten entgegen, die es fast unmöglich machen, ungeteilte Gleitringe einzusetzen.

Hier setzt die Erfindung an, deren Aufgabe es ist, einen Kupplungsaktuator der eingangs geschilderten Art dahingehen zu verbessern, dass ungeteilte Gleitringe für diesen verwendet werden können.

Dieser Aufgabe wird mit einem Kupplungsaktuator gelöst, welcher die Merkmale des Anspruchs 1 aufweist.

Die Aufgabe wird also auf überraschend einfache Art dadurch gelöst, dass hier die Nut nicht mehr mit zwei den Gleitring begrenzenden Nutwänden versehen ist, wie das bislang aus dem Stand der Technik bekannt ist, sondern das die Nut für einen Gleitring zu einer axialen Stirnfläche des Ringkolbens hin offen ist. Das heißt, dass hier jeweils nur eine Nutwand vorgesehen ist, gegen welche der Gleitring axial anschlägt. Eine derartige Ausgestaltung ermöglicht, wie dies gemäß einer Weiterbildung der Erfindung vorgesehen ist, die Verwendung von geschlossenen Gleitringen und ermöglicht ein Verfahren, bei dem der jeweils geschlossene Gleitring mit Presssitz axial in die radial innere Mantelfläche des Ringkolbens eingepresst wird.

In einer praktischen Weiterbildung der Erfindung kann vorgesehen sein, dass in die axial äußere und/oder axial innere Stirnseite des Ringkolbens ein Absatz eingebracht ist, durch welchen der innere Radius der radialen inneren Mantelfläche des Ringkolbens konstant bis zur Nutwand des wenigstens einen Geitrings auf einen kleineren Absatz- Radius verringert ist, wobei der Absatz-Radius um den Betrag des Absatzes bzw. um die radiale Höhe der Nutwand der Nut geringer ist.

Ebenfalls vorteilhaft ist eine Weiterbildung der Erfindung, nach welcher vorgesehen ist, dass in der radial inneren Mantelfläche des Ringkolbens zwei Gleitringe eingesetzt sind, wobei die Nut, in welche die Gleitringe jeweils eingesetzt sind, jeweils eine einzige sich radial erstreckende Nutwand aufweisen, wobei die Nuten zu einer axial äußeren bzw. inneren Stirnseite des Ringkolbens jeweils offen sind.

Diese Ausgestaltung lässt sich noch dadurch ergänzen, dass vorgesehen ist, dass in die axial äußere und in die axial innere Stirnseite des Ringkolbens jeweils ein Absatz eingebracht ist, durch welchen der innere Radius der radial inneren Mantelfläche des Ringkolbens konstant bis zur Nutwand des jeweiligen Gleitrings auf einen kleineren Absatz-Radius verringert ist, wobei der Absatz-Radius um den Betrag des Absatzes bzw. um die radiale Höhe der Nutwand der Nut geringer ist.

Ebenso von Vorteil ist eine praktische Weiterbildung der Erfindung, bei der vorgesehen ist, dass beide Absätze den gleichen Absatz-Radius aufweisen. In diesem Fall lassen sich baugleiche Gleitringe verwenden.

Besonders bevorzugt ist eine Ausgestaltung der Erfindung, bei welcher vorgesehen ist, dass der wenigstens eine radial untere Gleitring als geschlossener Ring ausgebildet ist.

Gleichfalls praktisch ist eine Ergänzun der Erfindung, bei welcher vorgesehen ist, dass der wenigstens eine radial untere Gleitring aus Kunststoff besteht.

Alternativ kann voregesehen sein, dass der wenigstens eine radial untere Gleitring einen Kern aus einem metallischen Werkstoff aufweist, um welchen Kern herum eine Kunststoffbeschichtung n aufgetragen ist, wobei die Dicke des Kerns zwischen 1 und 2 mm, vorzugsweise 1,5 mm und wobei die Schichtdicke der Kunststoffbeschichtung zwischen 0,2 und 1 mm, vorzugsweise 0,5 mm ist.

Diese Ausgestaltung lässt sich noch weiter dadurch ergänzen, dass vorgesehen ist, dass der wenigstens eine radial untere Gleitring radial geteilt ausgebildet ist und eine Teilungsfuge aufweist, wobei im eingepressten Zustand des Gleitrings in der zugehörigen Nut der Schiebehülse Fugenkanten des Gleitrings aneinander anstoßen. Wie eingangs erwähnt, werden zwar ungeteilte Gleitringe bevorzugt, jedoch ist die Ausgestaltung der Schiebehülse des Ringkolbens mit einer zu einem axialen Ende hin offenen Nut mit nur einer sich radial erstreckenden Nutwand auch zur Montage von radial geteilten Gleitringen von Vorteil, nämlich dann, wenn der Gleitring einen Kern aus Stahl oder einem metallischen Werkstoff aufweist, welcher besonders steif ist und sich schon aufgrund seiner Dicke nicht oder zumindest nur unzureichend in herkömmliche Ringnuten mit jeweils zwei Ringnutwänden einsetzen lässt.

Die Erfindung betrifft ebenfalls ein Verfahren zur Herstellung eines Kupplungsaktuators zum Betätigen einer Fahrzeugkupplung mit den Merkmalen wenigstens des Anspruchs 1, bei welchem in wenigsten eine Stirnseite des Ringkolbens wenigstens ein Absatz erzeugt wird, in welchen Absatz ein geschlossener Gleitring axial mit Presssitz eingepresst wird. Zur Erzeugung des Absatzes kann der Ringkolben durch ein Spritzgussverfahren bereits mit dem Absatz versehen werden oder der Absatz kann nach Fertigung des Rohlings des Ringkolbens spanabhebend in die radial innere Mantelfläche des Ringkolbens eingebracht werden. Nachdem der Absatz bzw. die Absätze fertiggestellt wurden, wird der jeweilige Gleitring axial in den zugehörigen Absatz mit Pressitz eingepreßt. Dabei können, die Gleitringe ein gewisses Übermaß aufweisen, was den Preßsitz verbessert.

Anhand der folgenden Figurenbeschreibung soll die Erfindung näher erläutert werden.

Es zeigt:
Fig. 1: ein Ausführungsbeispiel eines Kupplungsaktuators in hälftiger Längsschnittdarstellung,
Fig. 2: einen Ringkolben des Kupplungsaktuators aus Fig. 1 in Detailansicht, und
Fig. 3: eine Schiebehülse des Ringkolbens aus Fig. 2 in nochmals vergrößerter Ausriss-Schnittdarstellung.

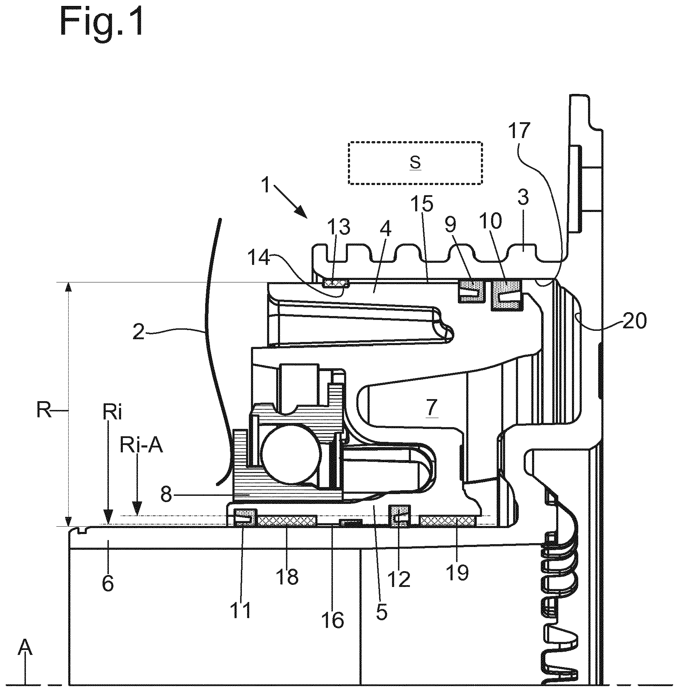

Fig. 1 zeigt eine hälftige Längsschnittansicht eines Ausführungsbeispiels eines erfindungsgemäßen Kupplungsaktuators 1 zur Betätigung einer schaltbaren Fahrzeugkupplung, von der symbolhaft ein Ausrückhebel 2 in Form einer Zunge einer Membranfeder dargestellt ist. Der Kupplungsaktuator 1 umfasst einen mit einem hydraulischen oder gasförmigen Druckmittel gefüllten Zylinder 3, in dem ein axial verschiebbarer Ringkolben 4 angeordnet ist. Mit dem Ringkolben 4 steht eine Schiebehülse 5 ortsfest in Wirkverbindung, die wiederum auf einer Führungshülse 6 gelagert ist. Ortsfest in Wirkverbindung kann bedeuten, dass der Ringkolben 4 und die Schiebehülse 5 einteilig ausgeführt sind, z. B. als Gussteil, so wie dies in Fig. 1 dargestellt ist. Es liegt aber auch im Rahmen der Erfindung, wenn die Schiebehülse 5 ein separates Bauteil ist, das auf geeignete Weise mit dem Ringkolben 4 in Verbindung steht.

Der Zylinder 3, der Ringkolben 4 und die Schiebehülse 5 bilden zusammen mit der Führungshülse 6 einen Arbeitsraum 7, der willkürlich mit dem Druckmittel gefüllt wird und damit eine Verschiebebewegung des Ringkolbens 4 mit der Schiebehülse 5 auslöst. Die axiale Verschiebebewegung des Ringkolbens 4 entlang einer axialen Mittelachse A kann durch eine in Fig. 1 nicht dargestellte Vorspannfeder unterstützt werden und wird auf ein Lager 8 übertragen, das wiederum die Verschiebebewegung des Ringkolbens 4 auf die Fahrzeugkupplung 2 überträgt. Die axiale Verschiebebewegung des Ringkolbens 4 bzw. seine jeweilige axiale Postition auf der Führungshülse wird durch ein in Fig. 1 nur angedeuteten Sensor S erfasst.

Der Arbeitsraum 7 wird von zwei Ringdichtungen 9, 10 am Ringkolben 4 und von zwei Dichtungen 11, 12 zwischen der Schiebehülse 5 und der Führungshülse 6 abgedichtet. Ein Gleitring 13 ist in eine radial obere Ringnut 14 eingelegt. Die radial obere Ringnut 14 ist in eine radial obere oder äußere Mantelfläche 15 des Ringkolbens 4 eingelassen.

Mit "radial oben", radial "außen", "radial unten" bzw. "radial innen" sollen im Nachfolgenden die Anordnungen von Details des Ringkolbens 4 in Bezug auf den Radius R des Ringkolbens 4 gemeint sein; so ist eine radial untere oder innere Mantelfläche 16 des Ringkolbens 4 in unmittelbarer Nähe zur Oberfläche der Führungshülse 6 angeordnet, während die radial obere oder äußere Mantelfläche 15 des Ringkolbens 4 in unmittelbarer Nähe zu einer inneren, radial außen angeordneten Mantelfläche 17 des Zylinders 3 angeordnet ist.

Radial innen sind zwei Gleitringe 18, 19 in die radial innere Mantelfläche 16 des Ringkolbens 4 eingesetzt. Hierbei ist ein axial äußerer und radial innerer Gleitring 18 von der Arbeitskammer 7 axial beabstandet und radial unterhalb des Lagers 8 angeordnet, während ein axial und radial innerer Gleitring 19 radial unterhalb der Arbeitskammer 7 und axial in der Nähe einer Rückwand 20 des Zylinders 3 angeordnet ist.

Die radial unteren Gleitringe 18, 19 sind jeweils als geschlossene Ringe ausgebildet und bestehen aus einem Kunststoff mit guten Gleiteigenschaften. Um die Dauerbelastung zu erhöhen, sind die Ringe mit einer Metalleinlage versehen.

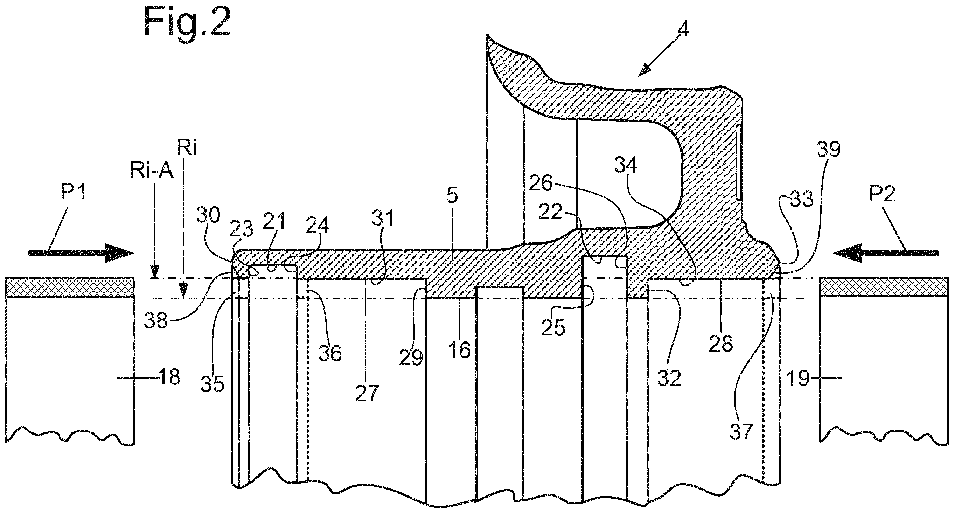

In Fig. 2 ist eine Ausrissvergrößerung des Ringkolbens 4 aus Fig. 1 in vergrößerter Ansicht dargestellt. Fig. 2 zeigt die besondere Gestaltung der radial inneren Mantelfläche 16 des Ringkolbens 4 zum Einsetzen der radial unteren Gleitringe 18, 19.

Während zum Einsetzen der in Fig. 2 nicht dargestellten Dichtungen 11, 12 herkömmliche Nuten 21, 22 mit die Nuten axial begrenzenden, sich radial erstreckenden Nutwänden 23, 24 und 25, 26 versehen sind, sind Nuten 27, 28 zur Halterung und Lagerung der radial unteren Gleitringe 18, 19 jeweils nach axial außen bzw. innen offen ausgestaltet. Das heißt, dass die Nut 27 zur Halterung und Lagerung des axial äußeren und radial inneren Gleitrings 18 nur eine Nutwand 29 aufweist, welche axial innen angeordnet ist, während die Nut 27 ansonsten nach axial außen offenen ist. Hierzu ist in eine axial äußere Stirnseite 30 des Ringkolbens 4 ein Absatz 31 eingebracht, durch welchen der innere Radius Ri der radial inneren Mantelfläche 16 des Ringkolbens 4 konstant bis zur Nutwand 29 des axial äußeren Gleitrings 18 auf einen entsprechend kleineren Absatz-Radius Ri-A verringert ist, wobei der Radius Ri-A um den Betrag des Absatzes 31 bzw. um die radiale Höhe der Nutwand 29 der Nut 27 geringer ist.

Entsprechendes gilt für die Nut 28 des axail inneren Gleitringes 19. Auch die Nut 28 des radial und axial inneren Gleitrings 19 weist nur eine Nutwand 32 auf, welche axial außen, also zur Rückwand 20 des Zylinders 4 hin gerichtet angeordnet ist, während die Nut 28 ansonsten nach axial innen offenen ist. Hierzu ist in eine axial innere Stirnseite 33 des Ringkolbens 4 ein Absatz 34 eingebracht, durch welchen der innere Radius Ri der radial inneren Mantelfläche 16 des Ringkolbens 4 konstant bis zur Nutwand 32 des axial äußeren Gleitrings 18 auf einen entsprechend kleineren Radius Ri-A verringert ist, wobei der Radius Ri-A um den Betrag der Höhe des Absatzes 34 bzw. um die radiale Höhe der Nutwand 32 der Nut 28 geringer ist.

Beide Absätze 31, 34 weisen also den gleichen Radius auf, was von Vorteil sein kann, denn hierdurch lassen sich Gleitringe 18, 19 mit jeweils gleichen Baumaßen verwenden.

Zur Montage der ungeteilten Gleitringe 18, 19 werden diese axial in die Absätze 31, 32 mit Presssitz eingepresst, was mit den Pfeilen P1, P2 angedeutet ist. Durch die nach axial außen bzw. innen offene Absätze 31, 34 wird das Einpressen von ungeteilten Gleitringen erst möglich. Dadurch, dass die Absätze einen bis zu den jeweils zugordneten Stirnseiten 30, 33 des Ringkolbens 4 reichenden konstanten Radius Ri-A aufweisen, verringert sich um diesen Radius auch die radiale Länge bzw. Höhe der Nutwände 24, 24 der Nut 21, welche sich sonst bis zur Mantelfläche 16 bzw. bis zum inneren Radius Ri erstrecken würde, was aber hinnehmbar ist, da die in Fig. 2 nicht dargestellte Dichtung 11 immer noch ausreichend geführt ist und ihre Dichtungsfunktion erfüllen kann.

Sollte es dennoch notwendig sein, die Dichtung 21 durch längere bzw. radial tiefere Nutwände zu führen, so können nach Montage der Gleitringe 18, 19 Adapterringe 35, 36 in den Absatz 31 eingesetzt werden, wodurch der Ringkolben 4 gleichzeitig staubgeschützt abgeschlossen wird. Die Adapterringe 35, 36 sind hierbei in gepunkteter Linie dargestellt. Entsprechend kann auch der axial innere Absatz 34 durch einen Abschlussring 37 verschlossen werden; auch dieser Abschlussring 37 ist durch gepunktete Linien angedeutet. Um das axiale Einpressen der Gleitringe 18, 19 zu erleichtern, geht die axial äußere Stirnseite 30 des Kolbens 4 bzw. der Schiebehülse 5 durch einen Konus 38 in den Absatz 31 über. Entsprechend geht auch die axial innere Stirnseite 33 des Kolbens 4 bzw. der Schiebehülse 5 durch einen Konus 39 in den Absatz 34 über.

Entsprechend den Nuten 27, 28 der radial inneren Gleitringe 18, 19 kann auch die Nut 14 des radial oberen Gleitrings 13 ausgestaltet sein, also ebenfalls nach axial außen offen gestaltet sein. In diesem Fall würde auch die radial obere Ringnut 14 nur eine sich radial erstreckende Nutwand aufweisen, wodurch auch der radial obere Gleitring 13 einteilig ausgestaltet sein und axial aufgepreßt werden könnte.

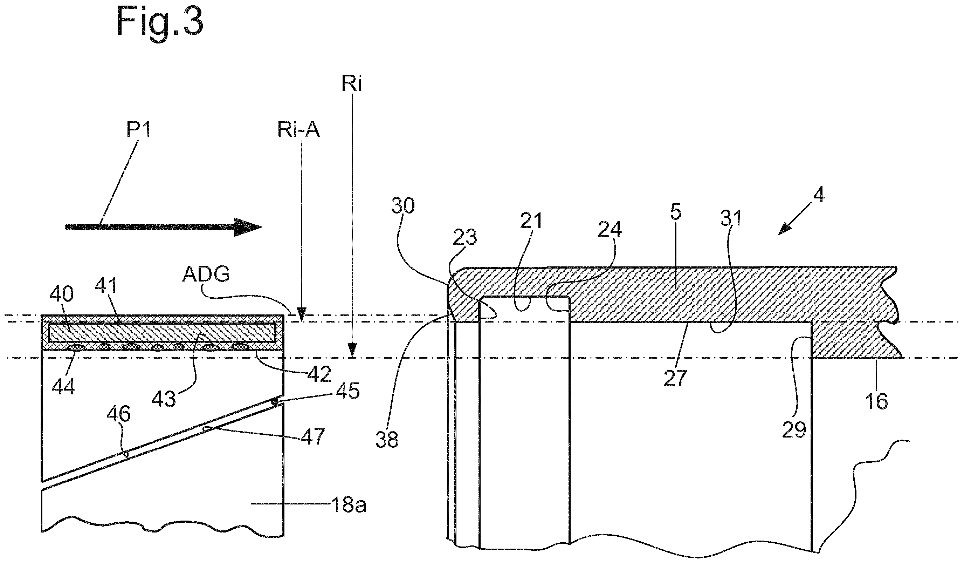

In Fig. 3 ist die Schiebehülse 5 des Ringkolbens 4 aus Fig. 2 in nochmals vergrößerter Ausriss-Schnittdarstellung gezeigt. Die Schiebehülse 5 entspricht dabei exakt der Schiebehülse 4 aus Fig. 2, so dass die in Bezug auf Fig. 2 gemachten Ausführungen auch für die Schiebehülse 5 gemäß Fig. 3 zutreffen. Lediglich der axial äußere und radial innere Gleitring 18a unterscheidet sich vom Gleitring 18 der Figuren 1 und 2. Während die Gleitringe 18, 19 der Figuren 1 und 2 jeweils als geschlossene Gleitringe aus einem Kunststoff mit guten Gleitlagereigenschaften bestehen, ist der Gleitring 18a gemäß Figur 3 als geschlitzter bzw. radial geteilter Ring ausgebildet. Ein Kern 40 des Gleitrings 18a besteht aus einem metallischen Werkstoff, nämlich aus gewalztem Stahl. Der Kern 40 hat eine Dicke von 1 - 2 mm, vorzugsweise von 1,5 mm. Um den Kern 40 herum ist eine Kunststoffbeschichtung 41 aufgetragen. Die Kunststoffbeschichtung 41 besteht im gezeigten Ausführungsbeispiel aus Polytetrafluorethylen (PTFE) und weist eine Schichtdicke von 0,2 bis 1 mm, vorzugsweise von 0,5 mm auf. Um die Lebensdauer des Gleitringes 18a zu erhöhen, ist die Kunststoffbeschichtung 41 wenigstens an ihrer radial inneren Mantelfläche 42 mit Poren 43 versehen, welche mit Schmierfett-Partikeln 44 gefüllt sind.

Der geteilte Gleitring 18a weist eine Teilungsfuge 45 auf; im eingepreßten Zustand stoßen Fugenkanten 46, 47 aneinander.

Die Montage des Gleitrings 18a erfolgt entsprechend der zuvor beschriebenen Montage der Gleitring 18, 19. Auch beim Aufpressen der Gleitringes 18a erfolgt ein verdrehsicherer Preßsitz, wofür dadurch gesorgt wird, dass der Ausgangsdurchmesser des Gleitrings 18a wenigstens um die Breite der Teilungsfuge 45 höher alsi m verpreßten Zustand ist. Jedenfalls liegt der Außendurchmesser ADG des Gleitrings 18a wenigstens um einen gewissen Betrag höher als die gedachte Linie des Innenradius Ri der Schiebehülse 5. Der in Fig. 3 nicht dargestellte axial und radial innere Gleitring kann genau wie der Gleitring 18a ausgebildet sein; alternativ ist es auch möglich, den axial und radial inneren Gleitring entsprechend dem Gleitring 19 aus Fig. 2 auszubilden, also als geschlossenen Gleitring aus Kunststoff, beispielsweise aus PTFE.

Die Ausgestaltung der Schiebehülse 5 des Ringkolbens 4 mit den zuvor beschriebenen Nuten 27, 28 mit jeweils nur einer Nutwand 29, 32 ist auch zur Montage des Gleitrings 18a von großem Vorteil, da sich auch geteilte Ringe bislang nicht montieren ließen, wenn diese einen relativ dicken und steifen Kern 40 aus Stahl aufwiesen. Denn derartige Kerne sind so steif, dass sie sich nicht in normale Ringnuten mit jeweils zwei Nutwänden einsetzen ließen.

Der in Fig. 1 dargestellte Kupplungsaktuator 1 findet bevorzugterweise als sogenannter "Central Pneumatic Clutch Actuator" (CPCA) also als pneumatisch betätigter Zentralausrücker eines automatisierten Schaltgetriebes eines schweren Nutzfahrzeugs Verwendung. Hierbei kann der Kupplungsaktuator 1 auch selbstnachstellend ausgebildet sein, wie dies in den bislang unveröffentlichten deutschen Patentanmeldungen DE 10 2016 012 865.8 und DE 10 2017 001 410.8 beschrieben ist.

### Bezugszeichenliste (Bestandteil der Beschreibung)

- 1: Kupplungsaktuator
- 2: Ausrückhebel
- 3: Zylinder
- 4: Ringkolben
- 5: Schiebehülse
- 6: Führungshülse
- 7: Arbeitsraum
- 8: Lager
- 9: Ringdichtung
- 10: Ringdichtung
- 11: Dichtung
- 12: Dichtung
- 13: Gleitring
- 14: radial obere Ringnut
- 15: radial äußere Mantelfläche des Kolbens 4
- 16: radial innere Mantelfläche des Kolbens 4
- 17: Mantelfläche 17 des Zylinders 3
- 18: axial äußerer und radial innerer Gleitring
- 18a: axial äußerer und radial innerer Gleitring (Variante)
- 19: axial und radial innerer Gleitring
- 20: Rückwand des Zylinders 4
- 21: Nut der Dichtung 11
- 22: Nut der Dichtung 12
- 23: Nutwand der Nut 21
- 24: Nutwand der Nut 21
- 25: Nutwand der Nut 22
- 26: Nutwand der Nut 22
- 27: Nut
- 28: Nut
- 29: Nutwand der Nut 27
- 30: axial äußere Stirnseite des Kolbens 4

- 31: Absatz
- 32: Nutwand der Nut 28
- 33: axial innere Stirnseite des Kolbens 4
- 34: Absatz
- 35: Adapterring
- 36: Adapterring
- 37: Abschlussring
- 38: Konus
- 39: Konus
- 40: Kern
- 41: Kunststoffbeschichtung
- 42: radial innere Mantelfläche der Kunststoffbeschichtung
- 43: Pore
- 44: Schmierfett-Partikel
- 45: Teilungsfuge
- 46: Fugenkante
- 47: Fugenkante

- A: Achse
- ADG: Außendurchmesser des Gleitringes 18a
- P1: Pfeil
- P2: Pfeil
- R: Radius
- Ri: innerer Radius
- Ri-A: Radius der Absätze 31, 34
- S: Sensor

## Patentansprüche

1. Kupplungsaktuator (1), zum Betätigen einer Fahrzeugkupplung, umfassend einen druckmittelgefüllten Zylinder (3), in dem ein Ringkolben (4) axial verschiebbar angeordnet ist, wobei der Ringkolben (4) in einer festen Wirkverbindung mit einer Schiebehülse (5) steht, die wiederum auf einer Führungshülse (6) axial verschieblich gelagert ist, wobei eine radial untere Mantelfläche (16) des Ringkolbens (4) einen Radius (Ri) aufweist und in unmittelbarer radialer Nähe zur Führungshülse (6) angeordnet ist, und umfassend mindestens ein Gleitring (18; 19; 18a), welcher die Schiebehülse (5) auf der Führungshülse (6) trägt, wobei der mindestens eine Gleitring (18; 19; 18a) in eine Nut (27; 28) in der radial inneren Mantelfläche (16) des Ringkolbens (4) eingesetzt ist, wobei die Nut (27; 28) des wenigstens einen Gleitrings (18; 19) eine einzige sich radial erstreckende Nutwand (29; 32) aufweist und wobei die Nut (27; 28) zu einer axial äußeren bzw. inneren Stirnseite (30; 33) des Ringkolbens (4) offen ist, **dadurch gekennzeichnet, dass** in der radial inneren Mantelfläche (16) des Ringkolbens (4) zwei Gleitringe (18, 19; 18a) eingesetzt sind, wobei die Nut (27, 28), in welche die Geleitringe (18, 19) jeweils eingesetzt sind, jeweils eine einzige sich radial erstreckende Nutwand (29, 32) aufweist, wobei die Nuten (27, 28) zu einer axial äußeren und inneren Stirnseite (30, 33) des Ringkolbens (4) jeweils offen sind.

2. Kupplungsaktuator nach Anspruch 1, **dadurch gekennzeichnet, dass** in die axial äußere und/oder axial innere Stirnseite (30; 33) des Ringkolbens (4) ein Absatz (31; 34) eingebracht ist, durch welchen der innere Radius (Ri) der radial inneren Mantelfläche (16) des Ringkolbens (4) konstant bis zur Nutwand (29; 32) des wenigstens einen Gleitrings (18; 19) auf einen kleineren Absatz-Radius (Ri-A) verringert ist, wobei der Absatz-Radius (Ri-A) um den Betrag des Absatzes (31; 34) bzw. um die radiale Höhe der Nutwand (29; 32) der Nut (27; 28) geringer ist.

3. Kupplungsaktuator nach Anspruch 1, **dadurch gekennzeichnet, dass** in die axial äußere und in die axial innere Stirnseite (30, 33) des Ringkolbens (4) jeweils ein Absatz (31, 34) eingebracht ist, durch welchen der innere Radius (Ri) der radial inneren Mantelfläche (16) des Ringkolbens (4) konstant bis zur Nutwand (29, 32) des jeweiligen Gleitrings (18, 19; 18a) auf einen kleineren Absatz-Radius (Ri-A) verringert ist, wobei der Absatz-Radius (Ri-A) um den Betrag des Absatzes (31, 34) bzw. um die radiale Höhe der Nutwand (29, 32) der Nut (27, 28) geringer ist.

4. Kupplungsaktuator nach Anspruch 3, **dadurch gekennzeichnet, dass** beide Absätze (31, 34) den gleichen Absatz-Radius (Ri-A) aufweisen.

5. Kupplungsaktuator wenigstens nach Anspruch 1, **dadurch gekennzeichnet, dass** der wenigstens eine radial untere Gleitring (18; 19) als geschlossener Ring ausgebildet ist.

6. Kupplungsaktuator nach Anspruch 5, **dadurch gekennzeichnet, dass** der wenigstens eine radial untere Gleitring (18; 19) aus Kunststoff besteht.

7. Kupplungsaktuator nach Anspruch 6, **dadurch gekennzeichnet, dass** der wenigstens eine radial untere Gleitring (18a) einen Kern (40) aus einem metallischen Werkstoff aufweist, um welchen Kern (40) herum eine Kunststoffbeschichtung (41) aufgetragen ist, wobei die Dicke des Kerns (40) zwischen 1 und 2 mm, vorzugsweise 1,5 mm und wobei die Schichtdicke der Kunststoffbeschichtung (41) zwischen 0,2 und 1 mm, vorzugsweise 0,5 mm ist.

8. Kupplungsaktuator nach Anspruch 7, **dadurch gekennzeichnet, dass** der wenigstens eine radial untere Gleitring (18a) radial geteilt ausgebildet ist und eine Teilungsfuge (45) aufweist, wobei im eingepressten Zustand des Gleitrings (18a) in der zugehörigen Nut (27) der Schiebehülse (5) Fugenkanten (46, 47) des Gleitrings (18a) aneinander anstoßen.

9. Verfahren zur Herstellung eines Kupplungsaktuator (1) zum Betätigen einer Fahrzeugkupplung mit den Merkmalen wenigstens des Anspruchs 1, bei welchem in wenigsten eine Stirnseite (30; 33) des Ringkolbens (4) wenigstens ein Absatz (31; 34) erzeugt wird, in welchen Absatz (31; 34) ein geschlossener Gleitring (18; 19) axial mit Presssitz eingepresst wird.

## Claims

1. A clutch actuator (1) for actuating a vehicle clutch, comprising a pressure-medium filled cylinder (3), in which an annular piston (4) is axially slidably arranged, wherein the annular piston (4) is fixedly operatively connected to a sliding sleeve (5), which in turn is axially slidably mounted on a guide sleeve (6), wherein a radially lower lateral surface (16) of the annular piston (4) has a radius (Ri) and is arranged in close radial proximity to the guide sleeve (6), and comprising at least one sliding ring (18; 19; 18a), which bears the sliding sleeve (5) on the guide sleeve (6), wherein the at least one sliding ring (18; 19,; 18a) is inserted into a groove (27; 28) in the radially inner lateral surface (16) of the annular piston (4), wherein the groove (27; 28) of the at least one sliding ring (18; 19) has a single groove wall (29; 32) extending radially and wherein the groove (27; 28) is open toward an axial outer or inner end side (30; 33) of the annular piston (4), **characterized in that**, two sliding rings (18; 19; 18a) are inserted into the radial inner lateral surface (16) of the annular piston (4), wherein the groove (27, 28), into which the sliding rings (18, 19) are respectively inserted respectively has a single groove wall (29, 32) extending radially, wherein the grooves (27, 28) are each open toward an axial outer and inner end side (30, 33) of the annular piston (4).

2. The clutch actuator according to claim 1, **characterized in that**, a shoulder (31; 34) is inserted into the axial outer and/or axial inner end side (30; 33) of the annular piston (4), said shoulder through which the inner radius (Ri) of the radial inner lateral surface (16) of the annular piston (4) is constantly reduced to the groove wall (29; 32) of the at least one sliding ring (18; 19) to a smaller shoulder radius (Ri-A), wherein the shoulder radius (Ri-A) is smaller by the amount of the shoulder (31; 34) or by the radial height of the groove wall (29; 32) of the groove (27; 28).

3. The clutch actuator according to claim 1, **characterized in that**, a shoulder (31, 34) is inserted into the axial outer and in the axial inner end side (30, 33) of the annular piston (4), said shoulder through which the inner radius (Ri) of the radial inner lateral surface (16) of the annular piston (4) is constantly reduced to the groove wall (29; 32) of the respective sliding ring (18; 19; 18a) to a smaller shoulder radius (Ri-A), wherein the shoulder radius (Ri-A) is smaller by the amount of the shoulder (31; 34) or by the radial height of the groove wall (29; 32) of the groove (27; 28).

4. The clutch actuator according to claim 3, **characterized in that**, both shoulders (31, 34) have the same shoulder radius (Ri-A).

5. The clutch actuator at least according to claim 1, **characterized in that**, the at least one radially lower sliding ring (18; 19) is configured as a closed ring.

6. The clutch actuator according to claim 5, **characterized in that**, the at least one radially lower sliding ring (18; 19) consists of plastic.

7. The clutch actuator according to claim 6, **characterized in that**, the at least one radially lower sliding ring (18a) comprises a core (40) made of a metallic material, about which core (40) a plastic layer (41) is applied, wherein the thickness of the core (40) is between 1 and 2 mm, preferably 1.5 mm and wherein the thickness of the plastic coating (41) is between 0.2 and 1 mm, preferably 0.5 mm.

8. The clutch actuator according to claim 7, **characterized in that**, the at least one radially lower sliding ring (18a) is radially divided and comprises a dividing joint (45), wherein when the sliding ring (18a) is pressed into the associated groove (27) of the sliding sleeve (5), joint edges (46, 47) of the sliding ring (18a) abut.

9. A method for producing a clutch actuator (1) for actuating a vehicle clutch having the features of at least claim 1, in which in at least one end side (30; 33) of the annular piston (4) at least one shoulder (31; 34) is generated, into the shoulder (31; 34) thereof a closed sliding ring (18; 19) is axially pressed into with press fit.

## Revendications

1. Actionneur d'embrayage (1), pour l'actionnement d'un embrayage de véhicule, comprenant un cylindre (3) rempli de fluide sous pression, dans lequel un piston annulaire (4) est disposé de manière mobile axialement, dans lequel le piston annulaire (4) se tient dans une liaison fonctionnelle fixe avec un manchon coulissant (5), qui est monté lui-même sur un manchon de guidage (6) de manière mobile axialement, dans lequel une surface d'enveloppe radialement inférieure (16) du piston annulaire (4) présente un rayon (Ri) et est disposée à proximité radiale immédiate du manchon de guidage (6), et comprenant au moins une bague de glissement (18 ; 19 ; 18a), laquelle porte le manchon coulissant (5) sur le manchon de guidage (6), dans lequel la au moins une bague de glissement (18 ; 19 ; 18a) est insérée dans une rainure (27 ; 28) dans la surface d'enveloppe radialement intérieure (16) du piston annulaire (4), dans lequel la rainure (27 ; 28) de la au moins une bague de glissement (18 ; 19) présente une seule paroi de rainure (29 ; 32) s'étendant radialement et dans lequel la rainure (27 ; 28) est ouverte vers une face frontale (30 ; 33) axialement extérieure ou intérieure du piston annulaire (4), **caractérisé en ce que** deux bagues de glissement (18, 19 ; 18a) sont insérées dans la surface d'enveloppe radialement intérieure (16) du piston annulaire (4), dans lequel la rainure (27, 28), dans laquelle les bagues de glissement (18, 19) sont respectivement insérées, présente respectivement une seule paroi de rainure (29, 32) s'étendant radialement, dans lequel les rainures (27, 28) sont respectivement ouvertes vers une face frontale (30, 33) axialement extérieure et intérieure du piston annulaire (4).

2. Actionneur d'embrayage selon la revendication 1, **caractérisé en ce qu'**une saillie (31 ; 34), par laquelle le rayon intérieur (Ri) de la surface d'enveloppe radialement intérieure (16) du piston annulaire (4) est réduit de manière constante jusqu'à la paroi de rainure (29 ; 32) de la au moins une bague de glissement (18 ; 19) à un rayon de saillie (Ri-A) plus petit, est introduite dans la face frontale (30 ; 33) axialement extérieure et/ou axialement intérieure du piston annulaire (4), dans lequel le rayon de saillie (Ri-A) est plus petit de la valeur de la saillie (31 ; 34) ou de la hauteur radiale de la paroi de rainure (29 ; 32) de la rainure (27 ; 28) .

3. Actionneur d'embrayage selon la revendication 1, **caractérisé en ce que** respectivement une saillie (31, 34), par laquelle le rayon intérieur (Ri) de la surface d'enveloppe radialement intérieure (16) du piston annulaire (4) est réduit de manière constante jusqu'à la paroi de rainure (29, 32) de la bague de glissement (18, 19 ; 18a) respective à un rayon de saillie (Ri-A) plus petit, est introduite dans la face frontale axialement extérieure et dans la face frontale axialement intérieure (30, 33) du piston annulaire (4), dans lequel le rayon de saillie (Ri-A) est plus petit de la valeur de la saillie (31, 34) ou de la hauteur radiale de la paroi de rainure (29, 32) de la rainure (27, 28).

4. Actionneur d'embrayage selon la revendication 3, **caractérisé en ce que** les deux saillies (31, 34) présentent le même rayon de saillie (Ri-A).

5. Actionneur d'embrayage au moins selon la revendication 1, **caractérisé en ce que** la au moins une bague de glissement (18 ; 19) radialement inférieure est réalisée sous la forme d'une bague fermée.

6. Actionneur d'embrayage selon la revendication 5, **caractérisé en ce que** la au moins une bague de glissement (18 ; 19) radialement inférieure est constituée de matière plastique.

7. Actionneur d'embrayage selon la revendication 6, **caractérisé en ce que** la au moins une bague de glissement (18a) radialement inférieure présente un noyau (40) composé d'un matériau métallique, noyau (40) autour duquel un revêtement plastique (41) est appliqué, dans lequel l'épaisseur du noyau (40) est comprise entre 1 et 2 mm, est de préférence d'1,5 mm et dans lequel l'épaisseur de couche du revêtement plastique (41) est comprise entre 0,2 et 1 mm, de préférence est de 0,5 mm.

8. Actionneur d'embrayage selon la revendication 7, **caractérisé en ce que** la au moins une bague de glissement (18a) radialement inférieure est réalisée de manière divisée radialement et présente un joint de séparation (45), dans lequel dans l'état enfoncé de la bague de glissement (18a) dans la rainure (27) associée du manchon coulissant (5) les bords de joint (46, 47) de la bague de glissement (18a) sont mis bout à bout.

9. Procédé pour la fabrication d'un actionneur d'embrayage (1) pour l'actionnement d'un embrayage de véhicule avec les caractéristiques au moins de la revendication 1, selon lequel au moins une saillie (31 ; 34) est produite dans au moins une face frontale (30 ; 33) du piston annulaire (4), saillie (31 ; 34) dans laquelle une bague de glissement (18 ; 19) fermée est enfoncée axialement avec un ajustement serré.
